# EUROPÄISCHE PATENTSCHRIFT

(11) **EP 1 985 386 B1**
(45) Veröffentlichungstag und Bekanntmachung des Hinweises auf die Patenterteilung: **18.11.2009**
(21) Anmeldenummer: 08011998.5
(22) Anmeldetag: 05.07.2006
(51) Int. Cl.: B21D 5/02

(54) **Biegewerkzeug für eine Abkantpresse**
Bending tool for a press brake
Outil de cintrage pour une presse plieuse

(30) Priorität: 06.07.2005 AT 11382005
(43) Veröffentlichungstag der Anmeldung: 29.10.2008
(62) Teilanmeldung aus: 06013881.5
(73) Patentinhaber: Trumpf Maschinen Austria GmbH & CO. KG., 4061 Pasching (AT)
(72) Erfinder: Denkmeier, Thomas, Dipl.-Ing., 4050 Traun (AT); Sperrer, Gerhard, 4553 Oberschlierbach (AT)
(74) Vertreter: Ofner, Clemens

(56) Entgegenhaltungen:
- DE-A1- 2 117 245
- DE-A1- 4 409 556
- US-A- 5 878 619

## Beschreibung

Die Erfindung betrifft ein Biegewerkzeug, wie es im Oberbegriff des Anspruches 1 beschrieben ist, (siehe z.B. DE-A-4409556).

Aufgabe der Erfindung ist es, ein Biegewerkzeug für eine Fertigungseinrichtung zum Biegen eines Blechteils zu schaffen, das eine geringe Masse aufweist.

Die Aufgabe der Erfindung wird durch ein Biegewerkzeug, wie es im Anspruch 1 definiert ist, erreicht. Der Vorteil liegt darin, dass neben der Reduzierung der Masse durch die bei ungespanntem Auftreffen auf einen Körperteil vor dem Erreichen einer "Mute- Position" - Sicherheitsdistanz zwischen den zueinander bewegten Biegewerkzeugen - ein ökonomischer Materialeinsatz und Fertigungsaufwand erreicht wird.

Vorteilhaft sind dabei Ausbildungen wie in den Ansprüchen 2 bis 4 beschrieben, wodurch eine festigkeitsoptimierte Anpassung der Biegewerkzeuge an den Einsatzfall möglich ist wodurch kostengünstige Werkzeuge erreicht werden.

Zum besseren Verständnis der Erfindung wird diese anhand der in den Figuren gezeigten Ausführungsbeispiele näher erläutert.

Es zeigen:
- Fig. 1: eine Fertigungseinrichtung mit dem erfindungsgemäßen Biegewerkzeug in Ansicht;
- Fig. 2: ein erfindungsgemäßes Skelettwerkzeug in Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

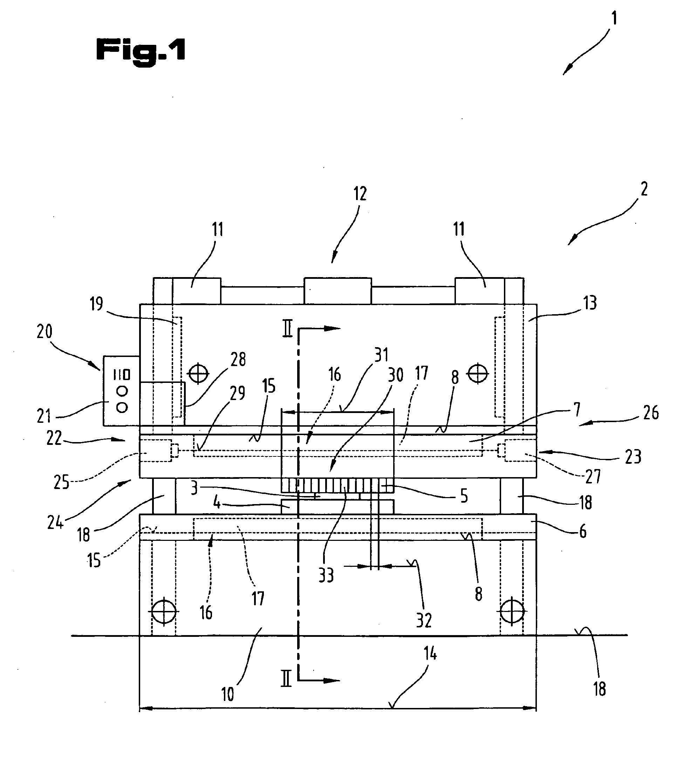

In der Fig. 1 ist eine Fertigungseinrichtung 1, insbesondere eine Abkantpresse 2, für eine Biegeumformung an einem Blechteil 3 zwischen einem feststehend, bevorzugt unteren Biegewerkzeug 4 und einem dazu relativ verstellbaren, oberen Biegewerkzeug 5 gezeigt. Die Biegewerkzeuge 4, 5 sind in einander gegenüberliegenden Werkzeugaufnahmen 6, 7 gespannt, die an gegenüberliegenden Stirnflächen 8, 9 eines feststehenden Tischbalkens 10 und eines, mittels Antriebe 11 einer Antriebsvorrichtung 12 verstellbaren Pressenbalken 13 angeordnet sind. Die Werkzeugaufnahmen 6, 7 erstrecken sich bevorzugt über eine gesamte Länge 14 des Tischbalkens 10 bzw. Pressenbalkens 13 und weisen eine, über die gesamte Länge 14 erstreckende Aufnahmenut 15 für die Biegewerkzeuge 4, 5 auf, und ist jede der Werkzeugaufnahmen 6, 7 mit einer Klemmeinrichtung 16, mechanisch oder hydromechanisch wirkend, versehen.

Der Tischbalken 10 ist unmittelbar bewegungsfest an Stirnflächen von C-förmigen Seitenständern 18 der Abkantpresse 2 befestigt, während der verstellbare Pressenbalken 13 in zu einer Aufstandsfläche 18 senkrecht verlaufenden Führungsanordnungen 19 verstellbar gelagert ist. Die Fertigungseinrichtung 1 verfügt über eine Steuereinrichtung 20 mit einem Ein- und Ausgabeterminal 21.

Weiters ist eine, mit der Steuereinrichtung 20 leitungsverbundene Sicherheitseinrichtung 22 vorgesehen, durch die der unmittelbare Arbeitsbereich zwischen den Biegewerkzeugen 4 überwacht wird, um bei einer unsachgemäßen Bedienung der Fertigungseinrichtung 1 Verletzungen einer Bedienkraft zu verhindern.

Die Sicherheitseinrichtung ist im gezeigten und beschriebenen Ausführungsbeispiel integriert in der Werkzeugaufnahme 7. Selbstverständlich ist deren Anordnung auch an anderer Stelle am Pressenbalken 13 durchaus im Umfang der Erfindung möglich und stellt keine Einschränkung dar.

Die Sicherheitseinrichtung 22 umfasst eine Lichtstrahlen- Sende- und Empfangsvorrichtung 23, bevorzugt eine Lasereinrichtung mit zumindest einem, in der Aufnahmenut 15 der Werkzeugaufnahme 7 des oberen Biegewerkzeuges 5 in einem Endbereich 24 angeordneten Laserstrahlsender 25 und einem, in einem entgegen gesetzten Endbereich 26 und dem Laserstrahlsender 25 gegenüberliegend angeordneten Laserstrahlempfänger 27 und einen entsprechenden Generator 28. Dies ermöglicht die Übertragung eines Lichtstrahls 29, insbesondere einen Laserlichtstrahl vom Laserstrahlsender 25 zum Laserstrahlempfänger 27, der als Schaltmittel für die Generierung eines Ein/Aus-Schaltsignals mit entsprechender Steuerfunktion in der Steuereinrichtung 20 heranzuziehen ist und die Schaltzustände einem Empfang des Laserstrahles 29 im Laserstrahlempfänger 27, bei ungehinderterem Durchgang, oder keinem Empfang bei unterbrochenem Durchgang entsprechen.

Zur Erreichung dieser Funktion ist weiter vorgesehen, das in der Werkzeugaufnahme 7 angeordnete, obere Biegewerkzeug 4, wie an sich bekannt, als Lamellenwerkzeug 30 auszubilden, also eine erforderliche Werkzeuglänge 31 durch eine sich aus einer Dicke 32 einer Werkzeuglamelle 33 ergebenden Anzahl an Werkzeuglamellen 33 zu bilden. Bevorzugt beträgt die Dicke 32 einer Werkzeuglamelle 33 zwischen 2,0 mm und 20,0 mm, wobei das Gewicht der Werkzeuglamelle 33 noch zusätzlich dadurch beeinflussbar ist, ob es sich bei der Werkzeuglamelle 33 um eine sogenannte Massivlamelle oder eine Skelettlamelle handelt. Sicherheitsrelevant ist das Gewicht, das zwischen 80N und 250N, bevorzugt 150N betragen soll. Damit wird sichergestellt, dass bei einem losen Anwirken der Werkzeuglamelle 33 auf einen Körperteil der Bedienkraft, z.B. einem Finger, keine Quetschgefahr besteht.

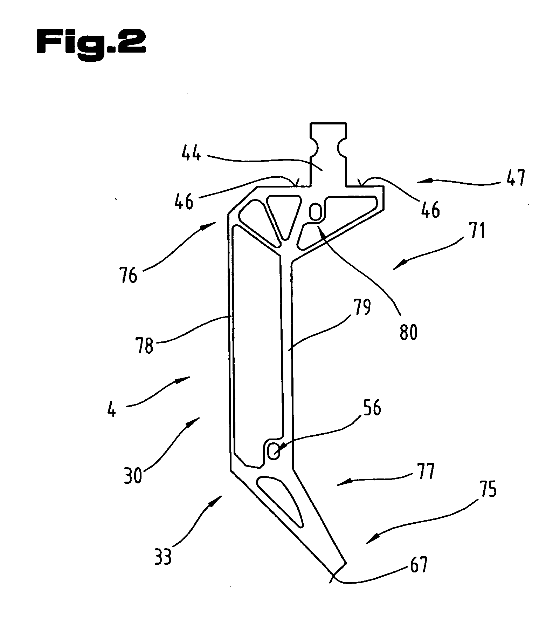

In der Fig. 2 ist ein Skelettwerkzeug 71 gezeigt.

Wie bereits erwähnt, soll zur Vermeidung von Verletzungen, das Einzelgewicht der Werkzeuglamelle 33, das sich aus der Masse der Werkzeuglamelle 33 ergibt, etwa zwischen 80N und 250N, bevorzugt 150N betragen. Diese Limitierung wird einerseits durch Festlegung der Dicke 32, wie der Fig. 1 zu entnehmen, in Abhängigkeit der Gesamtfläche der Werkzeuglamelle 33 erreicht, wobei größere Dicken dann möglich sind, wenn sogenannte, hinsichtlich der Festigkeit optimierte, Skelettwerkzeuge 71 zur Anwendung gelangen, wie eine solche Werkzeuglamelle 33 in Fig. 2 gezeigt ist. Mittels derartiger Skelettwerkzeuge 71 kann die Anzahl für eine vorgegebene Werkzeuglänge 31 anzuwendender Werkzeuglamellen 33 durch die Möglichkeit eine größere Dicke 32 zu wählen, wesentlich reduziert werden und damit das Umrüsten von Werkzeugsätzen vereinfacht werden.

Ein derartiges Skelettwerkzeug 71, wie der Fig. 2 zu entnehmen, besteht beispielsweise aus dem Spannfortsatz 44 zum Spannen in der Werkzeugaufnahme 7 sowie einem die Biegekante 67 ausbildenden Stempelfortsatz 75. Dieser besteht aus einem die Werkzeugschultern 47 mit den Anlageflächen 46 ausbildenden Stegegerippe 76 und die Biegekante 67 ausbildenden Stegegerippe 77. Verbunden sind diese beispielsweise durch einen Zugstab 78 und einen etwa parallel verlaufenden Druckstab 79. Möglich ist auch die Ausbildung von Führungsmittel 80 z.B. die Langlöcher 56, die die Relativverstellbarkeit für den Einsatz des Skelettwerkzeuges 71 mit der Sicherheitseinrichtung - wie in den vorhergehenden Beispielen beschrieben - gewährleistet.

Bevorzugt beträgt ein Flächenanteil der Stegegerippe 76, 77 und Zug- und Druckstab 78, 79 zwischen 5% und 30% einer durch die Außenkontur des Stempelfortsatzes 75 bestimmten Gesamtfläche.

Erwähnt sei noch, dass die Fertigung derartiger Werkzeuglamellen 33 besonders Material- und Fertigungsökonomisch durch Blechzuschnitte erfolgt. Durch Anwendung insbesondere der Laserschneidtechnik wird eine hohe Fertigungsgenauigkeit erzielt, die eine Nachbearbeitung vielfach nicht nötig macht, und wird eine kosten- und materialintensive Zerspanungsfertigung vermieden.

Der Ordnung halber sei abschließend darauf hingewiesen, dass zum besseren Verständnis des Aufbaus des Biegewerkzeuges dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

### Bezugszeichenaufstellung

- 1: Fertigungseinrichtung
- 2: Abkantpresse
- 3: Blechteil
- 4: Biegewerkzeug
- 5: Biegewerkzeug

- 6: Werkzeugaufnahme
- 7: Werkzeugaufnahme
- 8: Stirnfläche
- 9: Stirnfläche
- 10: Tischbalken

- 11: Antrieb
- 12: Antriebsvorrichtung
- 13: Pressenbalken
- 14: Länge
- 15: Aufnahmenut

- 16: Klemmeinrichtung
- 18: Aufstandsfläche
- 19: Führungsanordnung
- 20: Steuereinrichtung

- 21: Ein- und Ausgabeterminal
- 22: Sicherheitseinrichtung
- 23: Lichtstrahlen-Sende- und Empfangsvorrichtung
- 24: Endbereich
- 25: Laserstrahlsender

- 26: Endbereich
- 27: Laserstrahlempfänger
- 28: Generator
- 29: Lichtstrahl
- 30: Oberwerkzeug

- 31: Werkzeuglänge
- 32: Dicke
- 33: Werkzeuglamelle

- 44: Spannfortsatz
- 46: Anlagefläche
- 47: Werkzeugschulter

- 67: Biegekante

- 71: Skelettwerkzeug
- 75: Stempelfortsatz

- 76: Stegegerippe
- 77: Stegegerippe
- 78: Zugstab
- 79: Druckstab
- 80: Führungsmittel

## Patentansprüche

1. Biegewerkzeug (4), insbesondere Oberwerkzeug (30) für eine Abkantpresse (2) aus zumindest einer Werkzeuglamelle (33) mit einem Spannfortsatz (44) zum Spannen in einer Werkzeugaufnahme (7) und mit einem eine Biegekante (67) ausbildenden Stempelfortsatz (75), **dadurch gekennzeichnet, dass** der Stempelfortsatz (75) durch Werkzeugschultem (47) und die Biegekante (67) ausbildende Stegegerippe (76, 77) gebildet ist, die über zumindest einen senkrecht zu Anlageflächen (46) der Werkzeugschultern (47) verlaufenden Zugstab (78) und zumindest einem zum Zugstab (78) etwa parallel verlaufenden Druckstab (79) verbunden sind.

2. Biegewerkzeug (4) nach Anspruch 1, **dadurch gekennzeichnet, dass** ein Flächenanteil der Stegegerippe (76, 77) und Zug- und Druckstab (78, 79) zwischen 5% und 30% einer durch eine Außenkontur bestimmte Gesamtfläche beträgt.

3. Biegewerkzeug nach Anspruch 1 oder 2, **dadurch gekennzeichnet, dass** eine Dicke der Werkzeuglamelle (33) zwischen 2.0 mm und 20.0 mm beträgt.

4. Biegewerkzeug nach einem der Ansprüche 1 bis 3, **dadurch gekennzeichnet, dass** ein Gewicht der Werkzeuglamelle (33) zwischen 80 N und 250 N beträgt.

## Claims

1. Bending tool (4), in particular a top tool (30), for a press brake (2), comprising at least one tool segment (33) with a clamp projection (44) for clamping in a tool holder (7) and with a die projection (75) constituting a bending edge (67), **characterised in that** the die projection (75) is formed by tool shoulders (47) and web frames (76, 77) forming the bending edge (67) which are connected by means of at least one tension bar (78) extending perpendicular to contact surfaces (46) of the tool shoulders (47) and at least one pressure bar (79) extending approximately parallel with the tension bar (78).

2. Bending tool (4) as claimed in claim 1, **characterised in that** a surface proportion of the web frames (76, 77) and tension and pressure bar (78, 79) occupies between 5% and 30% of a total surface defined by an external contour.

3. Bending tool as claimed in claim 1 or 2, **characterised in that** a thickness of the tool segment (33) is between 2.0 mm and 20.0 mm.

4. Bending tool as claimed in one of claims 1 to 3, **characterised in that** a weight of the tool segment (33) is between 80 N and 250 N.

## Revendications

1. Outil de cintrage (4), en particulier outil amont (30) pour une presse plieuse (2) en au moins une lamelle d'outil (33) avec un prolongement de serrage (44) pour le serrage dans un logement d'outil (7) et avec un prolongement de poinçon (75) formant une arête de cintrage (67), **caractérisé en ce que** le prolongement de poinçon (75) est formé par des épaulements d'outil (47) et des corps cannelés (76, 77) réalisant l'arête de cintrage (67), qui sont reliés par au moins une tige de traction (78) s'étendant perpendiculairement aux faces d'application (46) des épaulements d'outil (47) et au moins une tige de pression (79) s'étendant à peu près parallèlement à la tige de traction (78).

2. Outil de cintrage (4) selon la revendication 1, **caractérisé en ce qu'**une part de face des corps cannelés (76, 77) et la tige de traction et de pression (78, 79) représente entre 5% et 30% d'une face totale définie par un contour extérieur.

3. Outil de cintrage selon la revendication 1 ou 2, **caractérisé en ce qu'**une épaisseur de la lamelle d'outil (33) représente entre 2,0 mm et 20,0 mm.

4. Outil de cintrage selon l'une des revendications 1 à 3, **caractérisé en ce qu'**un poids de la lamelle d'outil (33) représente entre 80 N et 250 N.
